# EUROPÄISCHE PATENTANMELDUNG

(11) **EP 2 390 081 A2**
(43) Veröffentlichungstag der Anmeldung: **30.11.2011**
(21) Anmeldenummer: 11164578.4
(22) Anmeldetag: 03.05.2011
(51) Int. Cl.: B29C 49/64, B29C 49/78, B29B 13/02

(54) **Verfahren und Vorrichtung zur Temperierung von Vorformlingen**

(30) Priorität: 25.05.2010 DE 102010021446
(71) Anmelder: Krones AG, 93073 Neutraubling (DE)
(72) Erfinder: Voth, Klaus, 93083, Obertraubling (DE); Wizinger, Frank, 93049, Regensburg (DE); Senn, Konrad, 93059, Regensburg (DE)
(74) Vertreter: Benninger, Johannes

(57) **Zusammenfassung**

Mit der Erfindung wird ein Verfahren zur mindestens zweistufigen Temperierung von Vorformlingen (28) aus thermoplastischem Kunststoff offenbart. Bei dem Verfahren werden die Vorformlinge (28) unmittelbar vor einem Blas- bzw. Streckblasvorgang auf eine entsprechend eines vorgebbaren Wärmeprofils prozessspezifisch verteilte, für den Blas- bzw. Streckblasvorgang erforderliche Erweichungstemperatur (T3) zumindest des unterhalb des Gewindebereichs (29) und/oder eines darunter angeordneten Kragenbereichs des Vorformlings (28) befindlichen Körperabschnittes gebracht. Zudem werden die Vorformlinge (28) zuvor annähernd gleichmäßig, insbesondere mit weitgehend homogener Temperaturverteilung (T2) vorgewärmt.

Die Erfindung umfasst weiterhin eine Heizvorrichtung (10) zur Durchführung des Verfahrens.

## Beschreibung

Die vorliegende Erfindung betrifft ein Verfahren zur Temperierung von Vorformlingen mit den Merkmalen des unabhängigen Verfahrensanspruchs 1. Die Erfindung betrifft weiterhin eine Heizvorrichtung zur Temperierung von Vorformlingen mit den Merkmalen des Anspruchs 8.

Die Herstellung von Getränkebehältern aus thermoplastischem Kunststoff, insbesondere aus dem meist verwendeten PET, erfolgt üblicherweise mittels eines Streckblasverfahrens. Bei diesem meist zweistufigen Streckblasverfahren werden die Behälter normalerweise aus spritzgegossenen, rotationssymmetrischen Vorformlingen (sog. Preforms) hergestellt. Diese Vorformlinge bestehen aus einem länglichen, zylindrischen Mantelabschnitt (sog. Body-Bereich) mit einem abgerundeten, geschlossenen Boden und einem Halsbereich mit oberer Öffnung, der auch als Mundstücksbereich bezeichnet werden kann. Nahe dieser Öffnung befindet sich normalerweise ein Gewindeabschnitt, der nach unten durch einen Kragen o. dgl. abgegrenzt sein kann. Der Gewindeabschnitt wird beim Spritzgießen des Vorformlings bereits auf das spätere Endmaß hergestellt. Er bleibt auch beim Streckblasvorgang in seiner ursprünglichen Form und bildet beim fertigen Getränkebehälter das Gewinde für den Verschlussdeckel. Der übrige Bereich des Vorformlings wird dagegen verformt und gedehnt. Bei der Verarbeitung werden die Vorformlinge auf eine definierte Prozesstemperatur erwärmt, um den Umformvorgang beim Streckblasen in der gewünschten Weise, mit gleichmäßiger Wandstärke und ohne Reißen des Materials zu ermöglichen. Die Erwärmung erfolgt meist mittels Infrarotstrahlung, da auf diese Weise eine definierte und gleichmäßige Temperierung der Vorformlinge ermöglicht ist.

Das zu verarbeitende Kunststoffmaterial (i.d.R. PET) hat die Eigenschaft, dass es beim Verstrecken zu einer Selbstverfestigung (sog. "strain hardening") kommt. Dabei ist die Umformtemperatur von entscheidender Bedeutung. Der Effekt der Selbstverfestigung wird normalerweise bei der Produktion von PET-Behältern genutzt, um die Wanddickenverteilung der Behälter zu steuern und zu optimieren. Um die Vorformlinge einerseits möglichst gleichmäßig zu erwärmen, andererseits jedoch eine mechanische Beeinträchtigung des Halsabschnittes und des Behältergewindes durch eine zu starke Erwärmung vor dem Streckblasvorgang zu vermeiden, hat sich die Temperaturprofilierung als vorteilhaft herausgestellt.

Je nach Verarbeitungsverfahren können die Vorformlinge über die aufgebrachte Infrarotstrahlung mit einem gewünschten Temperaturprofil beaufschlagt werden. Das Ziel hierbei ist es, die wärmeren Bereiche so lange vorrangig verformen zu lassen, bis der sich durch die Selbstverfestigung ergebende Verstreckungswiderstand größer wird als der Widerstand der benachbarten kälteren Bereiche. Üblicherweise ist das Temperaturprofil um den Umfang der Vorformlinge gleichmäßig verteilt und kann prozessabhängig in Längsrichtung der Vorformlinge variieren.

Aus der EP 0 736 367 B1 sind ein System und ein Verfahren zum Vorbehandeln von Vorformlingen bekannt, bei dem diese vor einem Blasformvorgang erwärmt werden. Dabei werden die Vorformlinge in ihrer Temperatur gleichmäßig vorbehandelt, bevor sie für das nachfolgende Blasformen wiedererwärmt werden. Die Vorbehandlung soll durch die Wärmeenergie bestimmt sein, die in jedem Vorformling enthalten ist, wobei Temperaturunterschiede zwischen den Vorformlingen reduziert bzw. gering gehalten werden sollen.

Die DE 25 45 134 A1 beschreibt ein Verfahren zum Erwärmen von Vorformlingen aus thermoplastischem Kunststoff mittels Infrarotstrahlung auf eine Blastemperatur. Die Vorformlinge werden bei dem Verfahren auf eine unterhalb der Blastemperatur liegende erste Temperaturstufe gleichmäßig erwärmt. Anschließend werden sie ausgehend von dieser ersten Temperaturstufe mittels der Infrarotstrahlung auf die zum Blasformen erforderliche Endtemperatur weiter erwärmt.

Ein vorrangiges Ziel der Erfindung besteht darin, ein verbessertes und besonders energieeffizientes Verfahren zur Temperierung von Vorformlingen im Zusammenhang mit einem Streckblasverfahren zur Verfügung zu stellen, bei dem die Vorformlinge mit einer gewünschten Temperaturprofilierung beaufschlagt werden, die weitgehend unter allen auftretenden äußeren Bedingungen exakt vorgebbar ist. Die zur Temperierung benötigte Wärmeenergie soll möglichst effizient und kostengünstig zu gewinnen sein. Ein weiteres Ziel der Erfindung besteht darin, eine verbesserte Heizvorrichtung für Vorformlinge zu schaffen, mit deren Hilfe die für die Vorformlinge benötigten Temperaturen und Temperaturprofile möglichst exakt und mit reduziertem Energieeinsatz einstell- und definierbar sind.

Diese Ziele der Erfindung werden mit den Gegenständen der unabhängigen Patentansprüche erreicht. Weitere vorteilhafte Ausgestaltungen werden durch die Unteransprüche beschrieben.

Zur Erreichung des erstgenannten Ziels schlägt die Erfindung ein mindestens zweistufiges Verfahren zur Temperierung von Vorformlingen aus thermoplastischem Kunststoff, insbesondere aus PET vor, bei dem die Vorformlinge vor bzw. während eines Blas- bzw. Streckblasvorgangs auf eine entsprechend eines vorgebbaren Wärmeprofils prozessspezifisch verteilte, für den Blas- bzw. Streckblasvorgang erforderliche Erweichungstemperatur des Kunststoffs gebracht werden. Unter prozessspezifisch verteilt bzw. einer prozessspezifisch verteilten Temperatur ist im vorliegenden Zusammenhang zu verstehen, dass das Temperaturprofil, das in Längsrichtung auf den Vorformling aufgebracht wird, danach ausgerichtet wird, wie das Material des Vorformlings im konkreten Fall unter den speziellen prozesstechnischen Bedingungen während des Blasvorgangs verteilt werden soll.

Der Temperierungsvorgang umfasst wenigstens zwei unterschiedliche, aufeinander folgende Heizstufen, die jeweils unterschiedliche Aufgaben erfüllen sollen. In der ersten Heizstufe soll eine annähernd gleichmäßige Grundtemperierung des gesamten Vorformlings erfolgen, die höchstens einer maximalen Erwärmungstemperatur eines Gewindebereichs am oben offenen Halsabschnitt des Vorformlings für eine Aufrechterhaltung dessen Formstabilität entspricht. In der zweiten Heizstufe soll eine entsprechend eines vorgebbaren Wärmeprofils prozessspezifisch verteilte, für den Blas- bzw. Streckblasvorgang erforderliche Erweichungstemperatur zumindest des unterhalb des Gewindebereichs und/oder eines darunter angeordneten Kragenbereichs des Vorformlings befindlichen Körperabschnittes erreicht werden. Mit der vorliegenden Erfindung wird ein verbessertes Konzept zur Temperaturschichtung für die Vorformlinge geschaffen. Die Erwärmung erfolgt zweistufig, um einerseits den Vorformling für den Streckblasvorgang optimal vorzubereiten und zu temperieren, so dass die dabei geformten Behälter eine möglichst gleichmäßige Wandstärke erhalten, und dass dabei ein möglichst geringer Ausschuss an fehlerhaften Behältern entsteht. Andererseits sollte der zweistufige Temperierungsvorgang mit einem reduzierten Energieeinsatz erfolgen, was bereits durch die zweistufige Erwärmung mit der zunächst gleichmäßigen Vorwärmung und der nachfolgenden gezielten Temperaturprofilierung zu gewährleisten ist.

Die Erwärmung erfolgt erfindungsgemäß in wenigstens zwei aufeinander folgenden Abschnitten bzw. Heizstufen der Heizvorrichtung. Der erste Abschnitt liefert eine Grunderwärmung für die Vorformlinge, um diese möglichst gleichmäßig auf eine Grundtemperatur zu erwärmen, die unterhalb der Erweichungstemperatur für das Kunststoffmaterial liegt. Diese Begrenzung der Temperatur ist notwendig, um den Gewindebereich nach Möglichkeit nicht unzulässig zu erwärmen. In dieser Grunderwärmungsphase wird noch keine Temperaturschichtung aufgebracht, da eine gleichmäßige Temperaturverteilung über den ganzen Vorformlingkörper erreicht werden soll. Die definierte Grundtemperatur sollte normalerweise zwischen mindestens 50°C und bis zu 90°C liegen, so dass auf diese Weise unterschiedliche Eingangs- und Lagerbedingungen der Vorformlinge ausgeglichen werden können. Da die Vorformlinge in unterschiedlichen Lagerorten bei unterschiedlichen Temperaturen gelagert und bevorratet werden können, bevor sie dem Streckblasvorgang zugeführt werden, ist es zur Erreichung möglichst guter Verformungsergebnisse notwendig, gleiche Eingangsbedingungen für die Vorformlinge zu schaffen. Demnach wird die erste Temperierungsstufe durch eine Grunderwärmungsphase und die zweite Temperierungsstufe durch eine nachfolgende Temperaturprofilierungsphase gebildet.

In der einen zweiten Abschnitt bildenden Temperaturprofilierungsphase werden die Vorformlinge mit in Längsrichtung unterschiedlich bzw. geschichteten Temperaturen beaufschlagt. Ggf. kann eine Temperaturmessung vor der Temperaturprofilierung zur Erfassung der Temperatur der Vorformlinge nach ihrer Grundtemperierung und zur Anpassung der Heizstufen vorgesehen sein. Wahlweise kann zumindest eine weitere Temperaturmessung nach der zweiten Heizstufe zur Erfassung der Endtemperatur der Vorformlinge nach der zweiten Heizstufe bzw. der Temperaturprofilierungsphase und eine Berücksichtigung der gemessenen Temperaturen bei der Anpassung der ersten Heizstufe vorgesehen sein.

Von Vorteil ist, wenn die Vorformlinge im Bereich der ersten Heizstufe bzw. der Grunderwärmungsphase auf eine weitgehend gleichmäßige Grundtemperatur zwischen ca. 50°C und ca. 90°C temperiert werden. Diese Temperatur richtet sich in erster Linie nach der maximal zulässigen Temperatur für den Halsbereich der aus PET oder einem anderen geeigneten thermoplastischen Kunststoff bestehenden Vorformlinge, da dieser Bereich mit dem später verwendeten Gewinde während des Erwärmens und des nachfolgenden Streckblasens nicht verändert und verformt werden soll, sondern während der gesamten Verarbeitung maßhaltig und unverändert bleiben soll. Eine vorteilhafte Variante des erfindungsgemäßen Verfahrens sieht vor, dass die Vorformlinge im Bereich der ersten Heizstufe mittels in die oben offenen Vorformlinge eintauchender Heizstäbe auf die Grundtemperatur erwärmt werden. Diese Heizstäbe wirken als sog. Booster, weil sie in der Lage sind, den jeweiligen Vorformling innerhalb einer sehr kurzen Zeit von der Lagertemperatur auf die gewünschte Grundtemperatur zu bringen, die in der nachfolgenden Heizstufe unter Aufprägung eines Temperaturprofils auf ein nochmals erhöhtes Temperaturniveau gebracht wird. Dieser Booster bzw. Heizstab kann eine typische Länge aufweisen, die einem einzelnen Heizstrahler entspricht, so dass damit it eine weitgehend homogene Erwärmung der Vorformlinge möglich ist. Darüber hinaus können jedoch auch weitere Strahler als Komponenten dieses Boosters fungieren, die für die gewünschte Grunderwärmung der Vorformlinge eine Wärmestrahlung von außen auf die Vorformlinge aufbringen.

Darüber hinaus kann eine besonders vorteilhafte Ausführungsvariante des erfindungsgemäßen Verfahrens dadurch gebildet sein, dass die Vorformlinge vor ihrer Förderung in eine Heizvorrichtung und/oder nach ihrer Entnahme aus einem Vorrat oder einem Vorratsraum mittels einer Warmluftbeaufschlagung vorgewärmt werden. So können für die Erzeugung der Grunderwärmung bspw. Teile einer Ofenabwärme genutzt werden, die ansonsten ungenutzt nach außen geleitet würde. Diese in vorteilhafter Weise zu nutzende Ofenabwärme kann bspw. durch Umlenkung warmer Abluft und/oder durch Leitung dieser Abluft durch geeignete Wärmetauscher genutzt und dadurch abgekühlt werden, so dass damit auch eine Energieeinsparung verbunden werden kann.

Die in der ersten Temperierungsstufe zur Vorwärmung der Vorformlinge verwendete Warmluft kann jedoch auch zumindest teilweise aus einer Prozessabwärme weiterer Komponenten einer Behälterfertigungs-, Behälterbehandlungs- und/oder Behälterabfüllmaschine oder -anlage gewonnen werden. So kann die in der ersten Temperierungsstufe zur Vorwärmung der Vorformlinge verwendete Warmluft insbesondere aus der Prozessabwärme der Heizstrecke für die Vorformlinge vor deren Blas- bzw. Streckblasumformung gewonnen werden. Alternativ oder in Kombination kann die in der ersten Temperierungsstufe zur Vorwärmung der Vorformlinge verwendete Warmluft aus der Prozessabwärme von anderen Einrichtungen wie Pasteurisierungseinrichtungen, Sterilisationseinrichtungen, Heißabfülleinrichtungen o. dgl. innerhalb der Behälterbehandlungs- und/oder Abfüllstrecke gewonnen werden.

Insbesondere sind die Maschinen, von denen die Abluft genutzt wird, ortsnah zur sog. Preformzuführung, der Zuführeinrichtung für die Vorformlinge aufgestellt. Im einfachsten Fall erfolgt die Wärmeübertragung über ein einfaches Rohr zur höher gelegenen Preformzuführung, dann über Konvektion. Es können auch Ventilatoren zum Transport der Warmluft eingesetzt werden. Vorzugsweise sind die Rohre isoliert. Bevorzugt findet die Preformvorerwärmung nach einem Sortieren statt und ist dadurch gleichmäßiger einstellbar. Eine vorteilhafte Ausführungsform kann einen kleinen Tunnel der Zuführschiene zur Blasmaschine vorsehen.

Eine weitere vorteilhafte Variante des erfindungsgemäßen Verfahrens kann eine Regelung der Temperatur nach der Vorerwärmung oder ein Erkennen der Temperatur nach der Vorerwärmung und eine darauf folgende Anpassung der Heizparameter, insbesondere individuell für jeden Vorformling / Preform, vorsehen. Die Vorerwärmung sieht einen Temperaturbereich von ca. 30° - 90°C, bevorzugt 40°-70°C, besonders bevorzugt von 40°-60°C vor. Bevorzugt werden dabei nur die Körper der Vorformlinge /Preforms erwärmt, nicht jedoch der Tragring und das Gewinde.

Wie bereits erwähnt, dient die zweite Heizstufe im Wesentlichen dazu, die Vorformlinge in dieser Temperaturprofilierungsphase mit einem über ihre Länge angepassten und/oder unterschiedlichen Temperaturprofil zu versehen. Hierbei ist darauf zu achten, den Gewindebereich beim Erwärmen des Halsabschnittes und des übrigen Vorformlings nicht zu stark zu erwärmen, damit er auch bei den nachfolgenden Verfahrensschritten seine Formstabilität beibehält. Da der Gewindebereich und der sog. "Neckring" (Halsring bzw. Stützring) für die Handhabung und den Transport benötigt werden, ist es wichtig, dass diese Bereiche des Vorformlings nicht modifiziert und verformt werden. Die Vorformlinge können im Bereich der zweiten Heizstufe insbesondere mittels Strahlungsheizeinrichtungen erwärmt werden. Diese können ggf. mit einer geregelten Oberflächenkühlung versehen sein, um Überhitzungen zu vermeiden.

Alternativ ist es möglich, dass die Temperaturprofilierungsphase nicht vor dem Blasvorgang, sondern direkt während des Blasvorgangs stattfindet. Dies ist beispielsweise denkbar, sofern eine Mikrowellen- oder Laserheizung zur Profilierung der Temperaturverteilung verwendet wird.

Zur Erreichung des oben genannten Ziels der Erfindung ist zudem eine Heizvorrichtung zur Temperierung von Vorformlingen aus thermoplastischem Kunststoff für einen nachfolgenden Blas- bzw. Streckblasvorgang vorgesehen. Diese erfindungsgemäße Heizvorrichtung ist mindestens zweistufig ausgebildet und umfasst eine Vorwärmstufe mit einer Warmluftbeaufschlagung der Vorformlinge zu ihrer weitgehend homogenen Grundtemperierung. Diese Warmluftbeaufschlagung ist mit weiteren Komponenten einer Behälterfertigungs-, Behälterbehandlungs- und/oder Behälterabfüllmaschine zur Nutzung der von diesen Maschinenteilen gelieferten Abwärme gekoppelt. Wahlweise kann zudem innerhalb der ersten Heizstufe ein in die Vorformlinge eintauchender Heizstab vorgesehen sein, der den Vorformling von innen erwärmt und auf die Grundtemperatur bringt. Weiterhin kann vorgesehen sein, dass zumindest nach der ersten Heizstufe und vor der zweiten Heizstufe ein Temperatursensor angeordnet ist, der über eine Signalübertragung mit einer Regelungseinheit zur Regelung der Heizleistung der ersten Heizstufe und/oder der Temperaturprofilierungsstufe gekoppelt ist.

Eine besonders vorteilhafte Variante der Heizvorrichtung sieht vor, dass die Vorwärmstufe mit einer, einer Blasform oder Streckblasform vorgeordneten Heizstrecke für die Vorformlinge zur Nutzung von deren Prozessabwärme gekoppelt ist. Damit ist einerseits eine energiesparende Verwertung von ansonsten ungenutzter Prozessabwärme möglich. Zudem können durch eine entsprechend geregelte Nutzung und Zuführung der Abwärme die Bedingungen und Parameter der Vorwärmung sehr exakt definiert und aufrechterhalten werden.

Wahlweise kann die Vorwärmstufe mit wenigstens einer Pasteurisierungseinrichtung, einer Sterilisationseinrichtung und/oder Heißabfülleinrichtung innerhalb der Behälterbehandlungs- und/oder -abfüllstrecke zur Nutzung deren Prozessabwärme gekoppelt sein. Darüber hinaus kann auch die Abwärme von elektrischen Maschinen genutzt werden, bspw. von elektrischen Antriebsmotoren, die für den Antrieb verschiedener Komponenten einer komplexen Maschine erforderlich sind.

Weitere Aspekte, Ausführungsvarianten und Vorteile bei der Konfiguration und dem Betrieb der erfindungsgemäßen Heizvorrichtung sind im Zusammenhang mit den oben bereits genannten Verfahrensvarianten zu sehen, da diese Verfahrensvarianten allesamt als Optionen für einen Betrieb der Heizvorrichtung zu sehen sind.

Weiterhin ist an dieser Stelle zu betonen, dass die vorliegende Erfindung grundsätzlich zur Anwendung in Mikrowellenöfen, Rundläuferöfen, Linearöfen, stationären Öfen etc. geeignet ist. Weiterhin ist die Verwendung von individuellen Heiztaschen denkbar, wobei jeder Vorformling in einer separaten Heiztasche selektiv temperiert wird. Ergänzend sei darauf hingewiesen, dass neben den erwähnten zwei getrennten Heizstufen ggf. weitere Heizstufen vorgesehen sein können, ohne dass dies an dieser Stelle im Detail erläutert ist.

Eine weitere sinnvolle Option der erfindungsgemäßen Heizvorrichtung bzw. des erfindungsgemäßen Temperierverfahrens kann darin bestehen, dass der Teilungsabstand der Vorformlinge bei der Vorwärmung deutlich kleiner ist als beim späteren Blasvorgang, um auf diese Weise einen verbesserten Energieeinsatz und eine effektivere Nutzung der eingesetzten Heizenergie zu bewirken. So kann der Teilungsabstand bei der Erwärmung bspw. nur ca. die Hälfte des Teilungsabstandes beim Blasvorgang oder auch weniger betragen, um die deutlich geringer voneinander beabstandeten Vorformlinge besonders effektiv erwärmen zu können. Der Teilungsabstand beim Blasformen ist dagegen durch die technischen Parameter der Maschine vorgegeben und kann normalerweise nicht weiter reduziert werden. Der gewählte Teilungsabstand bei der Vorwärmung kann insbesondere kleiner als ca. 80 mm gewählt werden, bevorzugt sogar kleiner als ca. 40 mm.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechend nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Darstellung einer Behälterformungsvorrichtung zur Streckblasumformung von Vorformlingen zu Flüssigkeitsbehältern.
Fig. 2 zeigt in einer schematischen Darstellung eine Heizstrecke gemäß Fig. 1.
Fig. 3 zeigt eine schematische Ansicht einer bevorzugten Ausführungsvariante der Behälterumformungsvorrichtung gemäß Fig. 1.
Fig. 4 zeigt eine weitere Variante einer Behälterumformungsvorrichtung mit einer zusätzlichen Vorwärmung.
Fig. 5 zeigt eine Detailansicht des Boosters bzw. der ersten Heizstufe.
Fig. 6 zeigt eine schematische Darstellung einer Blasvorrichtung mit Abwärmenutzung zur Vorerwärmung von Vorformlingen.
Fig. 7 zeigt die Komponenten einer Streckblasvorrichtung mit den verschiedenen Möglichkeiten zur Abwärmenutzung.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

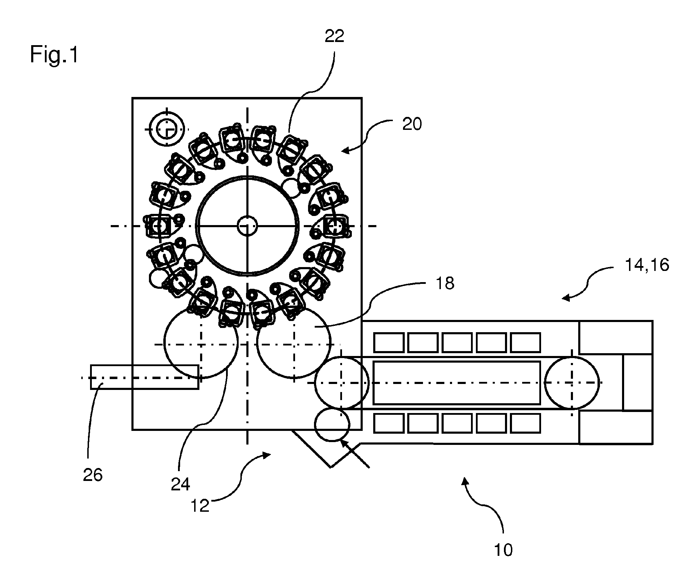

Die schematische Darstellung der Fig. 1 zeigt eine Behälterformungsvorrichtung 10 zur Streckblasumformung von Vorformlingen zu Flüssigkeitsbehältern. Die Behälterformungsvorrichtung 10 umfasst einen rotierenden Einlaufbereich 12 für die Vorformlinge, eine Heizstrecke 14 mit einer geregelten zweistufigen Heizvorrichtung 16 zur Temperierung der Vorformlinge und einen sich daran anschließenden rotierenden ersten Übergabestern 18 zur Förderung der temperierten Vorformlinge zu einer rotierenden Streckblasvorrichtung 20. Diese rotierende Streckblasvorrichtung 20 weist eine Mehrzahl von Blasformstationen 22 auf, in denen die Vorformlinge zu Flüssigkeitsbehältern umgeformt werden, bevor sie mittels eines zweiten Übergabesterns 24 zu einer linear fördernden Fördervorrichtung 26 übergeben werden, mit der die Behälter insbesondere zu einer Füllstation (nicht dargestellt) befördert werden.

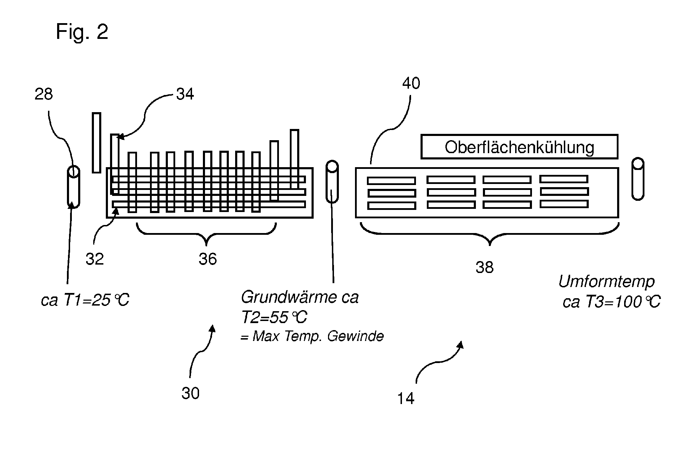

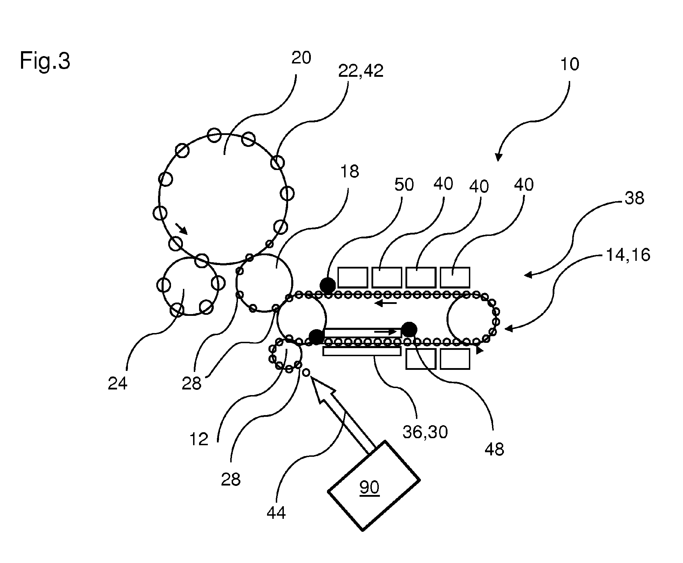

Die schematische Darstellung der Fig. 2 zeigt in einer schematischen Darstellung eine Heizstrecke 14 gemäß Fig. 1, die Teil der Heizvorrichtung ist. In der Heizstrecke 14 werden die zunächst relativ kalten Vorformlinge 28, die bspw. eine Temperatur T1 von ca. 25°C aufweisen können, in der ersten Heizstufe 30 (vgl. Fig. 3) auf eine Grundwärme T2 von ca. 55°C erwärmt. Diese Grundwärme T2 entspricht im vorliegenden Ausführungsbeispiel der maximalen Gewindetemperatur, der die Vorformlinge 28 ausgesetzt werden können, ohne dass sich der Gewindebereich verformt. Die erste Heizstufe 30 kann wahlweise einen Strahlerbereich 32 mit Infrarotstrahlern und/oder zusätzliche Heizstäbe 34 aufweisen, die zur schnellen und präzisen Erwärmung der Vorformlinge 28 jeweils in diese eintauchen können. Beide Heizeinrichtungen 32 und 34 können wahlweise kombiniert werden, wodurch die erste Heizstufe 30 als Booster 36 wirkt, mit dem die Vorformlinge 28 schnell auf exakt die gewünschte Grundtemperatur T2 (hier: ca. 55°C) gebracht werden können.

Die sich daran anschließende zweite Heizstufe 38 umfasst ebenfalls einen Strahlerbereich 40 mit Infrarotstrahlern, die jedoch unterschiedlich geregelt sind, um die gewünschte Temperaturprofilierung zu erzeugen, so dass einerseits die notwendige Umformtemperatur T3 von ca. 100°C erreicht wird, dass aber andererseits der Gewindebereich der Vorformlinge 28 auf dem Temperaturniveau von T2 bleibt.

Die Darstellung der Fig. 3 zeigt eine schematische Ansicht einer bevorzugten Ausführungsvariante der Behälterumformungsvorrichtung gemäß Fig. 1. So ist auch hier wieder die Behälterformungsvorrichtung 10 mit dem rotierenden Einlaufbereich 12 für die Vorformlinge 28, der Heizstrecke 14 mit der geregelten zweistufigen Heizvorrichtung 16 zur Temperierung der Vorformlinge 28 und dem sich daran anschließenden rotierenden ersten Übergabestern 18 zur Förderung der temperierten Vorformlinge 28 zur rotierenden Streckblasvorrichtung 20 verdeutlicht. Die Vorformlinge 28 werden aus einem Vorratsraum bzw. Speicher 90 entnommen und pber einen linearer Zuführbereich 44 dem rotierenden Einlaufbereich 12 zugeführt. In dieser rotierenden Streckblasvorrichtung 20 werden die Vorformlinge 28 mittels der am Außenumfang angeordneten Blasformstationen 22 zu Flüssigkeitsbehältern 42 umgeformt, bevor sie mittels des zweiten Übergabesterns 24 an die Fördervorrichtung 26 (vgl. Fig. 1) übergeben werden, mit der die Behälter 42 zur Füllstation oder einer anderen Behandlungsstation (nicht dargestellt) befördert werden.

Die Heizstrecke 14 weist knapp hinter dem Einlaufbereich 12 den Booster 36 bzw. die erste Heizstufe 30 zur Grundtemperierung der Vorformlinge 28 auf. Dem Booster 36 nachgeordnet sind die Strahlerbereiche 40 der zweiten Heizstufe 38, im gezeigten Ausführungsbeispiel durch insgesamt sechs hintereinander angeordnete Heizkästen angedeutet. Dem rotierenden Einlaufbereich 12 mit dem Einlaufstern ist ein linearer Zuführbereich 44 vorgeordnet, mit dem die Vorformlinge 28 der Behälterumformungsvorrichtung 10 zugeführt werden.

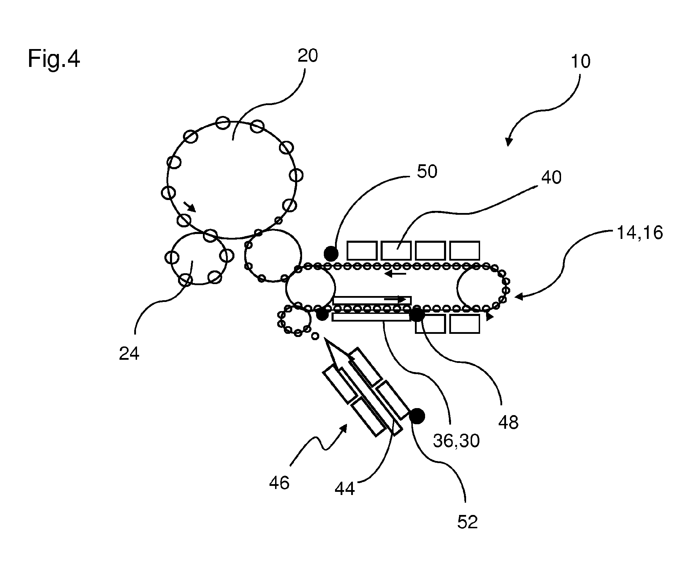

Entsprechend Fig. 4 kann dieser lineare Zuführbereich 44 mit einer zusätzlichen Vorwärmvorrichtung 46 ausgestattet sein, die bspw. von der Abwärme der Heizvorrichtung 16 o. dgl. gespeist sein kann, so dass auf diese Weise ein erheblicher Anteil der ansonsten ungenutzt abzuführenden Wärmeenergie zum Vorwärmen der Vorformlinge 28 und damit zur Effizienzsteigerung des Temperierungsprozesses genutzt werden kann. Der übrige Aufbau der Vorrichtung 10 unterscheidet sich nicht von der Ausführungsvariante gemäß Fig. 3.

Es ist alternativ auch denkbar, dass die Vorwärmvorrichtung 46, die bspw. durch die Abwärme der Heizvorrichtung o. dgl. gespeist wird, als erste Heizstufe 30 fungiert, und somit eine gleichmäßige Vorwärmung der Vorformlinge 28 garantiert, bevor diese in die zweite Heizstufe 38 zur Temperaturprofilierung gelangen. Diese Anordnung trägt auf jeden Fall zur Effizienzsteigerung des Temperierprozesses bei.

Beiden Varianten gemäß Fig. 3 und Fig. 4 gemeinsam sind die Temperaturmesspunkte, die schematisch angedeutet sind. So befindet sich der erste Temperatursensor 48 unmittelbar nach der ersten Heizstufe 30 bzw. dem Booster 36. Der zweite Temperatursensor 50 befindet sich hinter der zweiten Heizstufe 38, d.h. hinter dem letzten Heizkasten mit den darin angeordneten Strahlerbereichen 40, wie dies in den Figuren 3 und 4 jeweils verdeutlicht ist. Wahlweise kann gemäß Fig. 4 ein dritter Temperatursensor 52 im linearen Zuführbereich 44 und der Vorwärmung 46 bzw. vor diesen Bereichen angeordnet sein. Das Ausgangssignal dieses dritten Temperatursensors 52 kann vorzugsweise zusätzlich in einem Regelkreis der Heizvorrichtung 14 berücksichtigt werden.

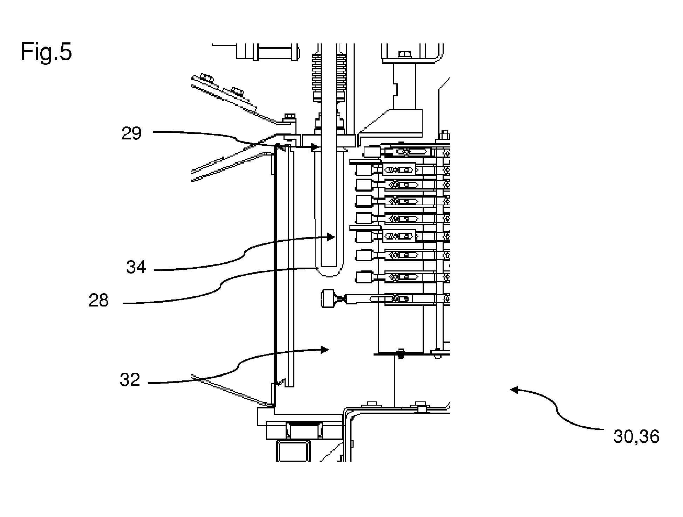

Die Detailansicht der Fig. 5 verdeutlicht eine Ausführungsvariante der ersten Heizstufe 30 bzw. des Boosters 36. Hierbei kann gemäß Fig. 2 vorgesehen sein, dass der auf die Grundtemperatur T2 von ca. 55°C zu erwärmende Vorformling 28 mit einem oberen Gewindebereich 29 mittels des in diesen vollständig eintauchenden Heizstabes 34 und/oder mittels der Infrarotstrahler des Strahlerbereichs 32 erwärmt wird. Die Strahler des Strahlerbereichs 32 können vorzugsweise über eine geeignete Kühlung verfügen, die durch strömende Kühlluft eine Überhitzung der Strahler im Heizofen verhindert.

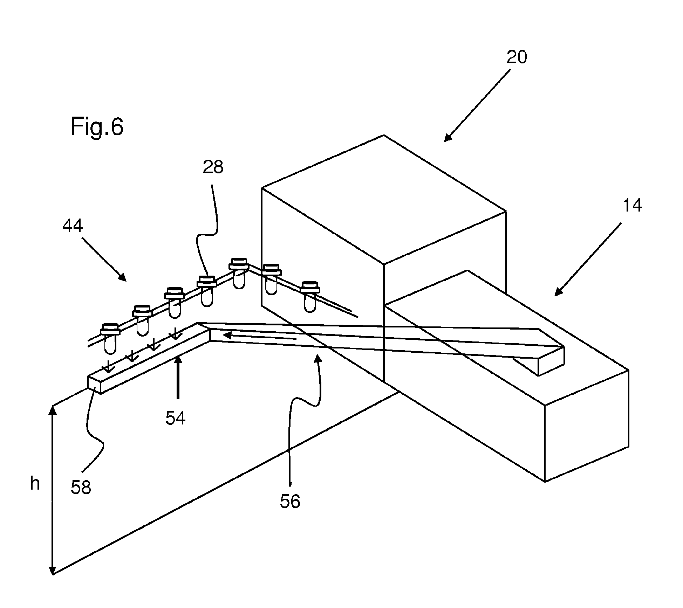

Die schematische Darstellung der Fig. 6 zeigt eine prinzipielle Variante zur Nutzung der Abwärme 54 aus der Heizstrecke 14 und/oder einer der Streckblasvorrichtung 20 angeschlossenen bzw. dort für das Blasformen notwendigen Heizeinrichtung, die über einen Abluftkanal 56 und einer Heizdüse 58 den Vorformlingen 28 im Zuführbereich 44 zugeführt werden kann. Da bei bisher bekannten Konfigurationen die Abwärme aus der Heizstrecke 14 und/oder dem Blasmodul ohne weitere energetische Nutzung in die Umgebung bzw. die umgebende Halle abgeblasen wurde, stellt die Variante zur Abwärmenutzung gemäß Fig. 6 eine deutliche Effizienzverbesserung dar. Die weiteren Komponenten der Heizstrecke 14 sind in Fig. 6 der Übersichtlichkeit halber nicht dargestellt. Insbesondere kann um die Düsen und den Transportpfad der Vorformlinge ein Tunnel angeordnet sein, um Wärmeverlust zu vermeiden.

Insbesondere wird die Abluft ohne zusätzliche Ventilatoren nur über den Aufstieg der Wärme zu den Preforms in der höheren Lage der Zuführung befördert. Es könnten aber auch Ventilatoren oder die recycelte Luft aus dem Streckblasvorgang hierzu verwendet werden.

Die Leitungen sind insbesondere isoliert.

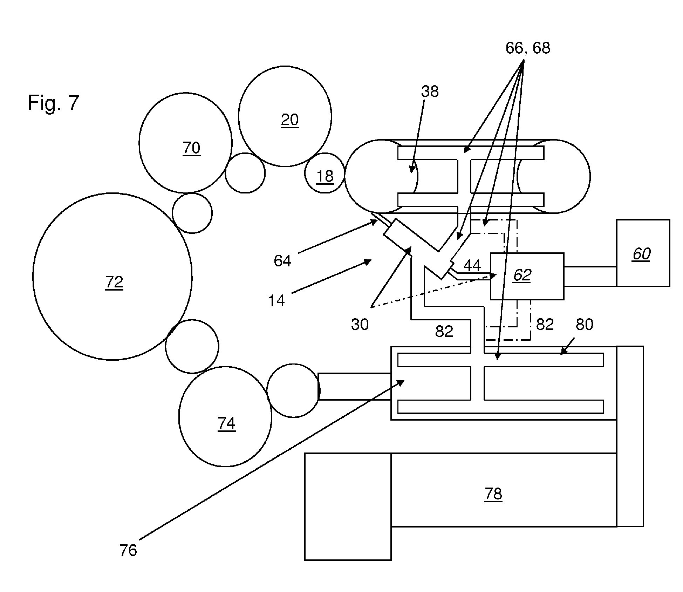

Die schematische Darstellung der Fig. 7 verdeutlicht anhand der verschiedenen Komponenten einer Streckblasvorrichtung 20 zur Herstellung von Flüssigkeitsbehältern aus Vorformlingen verschiedene Möglichkeiten der Abwärmenutzung aus verschiedenen Prozessen zur Vorwärmung der Vorformlinge, bevor diese in die Heizstrecke befördert werden. Die Vorformlinge werden in einem Vorrat gelagert und gelangen von dort bspw. auf eine Schütte 60, von wo aus sie zur Sortierung in einem Rollen- oder Scheibensortierer 62 gelangen. Von diesem Sortierer 62 gelangen sie über den Zuführbereich 44 zur ersten Heizstufe 30 bzw. zum Booster 36 der Heizstrecke 14, wo die Vorerwärmung auf die weitgehend homogen über das gesamte Volumen der Vorformlinge verteilte Grundtemperatur T2 (vgl. Fig. 2) stattfindet. Über eine Zuführschiene 64 werden die Vorformlinge nach der Grundtemperierung in die zweite Heizstufe 38 der Heizstrecke 14 befördert, wo sie entsprechend der gewünschten Temperaturprofilierung auf eine inhomogene Blastemperatur T3 (entsprechend Fig. 2) aufgeheizt werden.

Wie anhand der Darstellung der Fig. 7 verdeutlicht ist, weist der Ofen der zweiten Heizstufe 38 mehrere Abluftkanäle 66 auf, die über Verbindungskanäle 68 zur Vorwärmung der ersten Heizstufe 30 und/oder zum Sortierer 62 führen können. Dieser Verbindungskanal 68 zwischen dem Ofen und dem Sortierer 62 ist als Option zu verstehen und in unterbrochener Linierung eingezeichnet.

Über den ersten Übergabestern 18 werden die für den Streckblasvorgang vorbereitend temperierten Vorformlinge zum sog. Blasrad der Streckblasvorrichtung 20 befördert, wo sie zu Flüssigkeitsbehältern umgeformt und anschließend in einer integrierten Behälterformungs- und Abfüllmaschine nacheinander zu einem Rinser 70, einer Fülleinrichtung 72, einer Etikettiereinrichtung 74, einer Pasteurisiereinrichtung 76 sowie einem sich daran anschließenden Verpackungsmodul 78 befördert werden, wo sie je nach Bedarf zu Gebinden und/oder Paletten oder anderen Verpackungseinheiten zusammengefasst und versandfertig gemacht werden können. Wie in Fig. 7 angedeutet, liefert die wärmeintensive Pasteurisiereinrichtung 76 eine weitere Möglichkeit der effektiven Abwärmenutzung, was durch entsprechende Abwärmekanäle 80 und Verbindungskanäle 82 angedeutet ist, die zur Vorwärmstufe 30 und/oder zum Sortierer 62 führen.

Die in Fig. 7 dargestellten Verarbeitungsstationen der integrierten Maschine sind als sinnvolle Optionen zu verstehen, die teilweise auch entfallen können. Grundsätzlich sollen damit jedoch die effektivsten Varianten der Abwärmenutzung aufgezeigt werden, die in unterschiedlichen weiteren Varianten abgewandelt oder miteinander kombiniert werden können.

Insbesondere kann zur Vergleichmäßigung der Erwärmung der Vorformlinge auch eine Regelung vorhanden sein, die über Temperatursensoren die Vorwärmungstemperatur regelt. Je nach eingeschalteten IR-Strahlern im Ofen ist die Abluft wärmer bzw. kälter, deswegen könnte vor der Vorwärmeinheit noch ein zusätzlicher Lufterwärmer vorhanden sein, der eine konstante Temperatur der Luft sicherstellt. Ein Sensor kann zur Erfassung der Vorformlingtemperatur am Ende der Vorwärmeinheit angebracht sein, ein anderer kann zur Messung der Temperatur der Ofenabluft in den Abluftleitungen vor dem zusätzlichen Lufterwärmer sitzen.

Die Erfindung wurde unter Bezugnahme auf die in den Figuren 1 bis 7 gezeigten und als bevorzugt bzw. optional zu verstehenden Ausführungsformen beschrieben. Es ist jedoch für einen Fachmann vorstellbar, dass Abwandlungen oder Änderungen der Erfindung gemacht werden können, ohne dass dadurch der Schutzbereich der nachstehenden Ansprüche verlassen wird.

### Bezugszeichenliste

- 10: Behälterumformungsvorrichtung
- 12: Einlaufbereich
- 14: Heizstrecke
- 16: Heizvorrichtung
- 18: Erster Übergabestern
- 20: Streckblasvorrichtung
- 22: Blasformstation
- 24: Zweiter Übergabestern
- 26: Fördervorrichtung
- 28: Vorformling
- 29: Gewindebereich
- 30: Erste Heizstufe
- 32: Strahlerbereich
- 34: Heizstab
- 36: Booster
- 38: Zweite Heizstufe
- 40: Strahlerbereich
- 42: Flüssigkeitsbehälter
- 44: Linearer Zuführbereich
- 46: Vorwärmvorrichtung
- 48: Erster Temperatursensor
- 50: Zweiter Temperatursensor
- 52: Dritter Temperatursensor
- 54: Abwärme
- 56: Abluftkanal
- 58: Heizdüse
- 60: Schütte
- 62: Sortierer, Rollen- oder Scheibensortierer
- 64: Zuführschiene
- 66: Abluftkanal
- 68: Verbindungskanal
- 70: Rinser
- 72: Fülleinrichtung
- 74: Etikettiereinrichtung
- 76: Pasteurisiereinrichtung
- 78: Verpackungsmodul
- 80: Abwärmekanal
- 82: Verbindungskanal
- 90: Vorratsraum

- T1: Ausgangstemperatur
- T2: Grundwärme / max. Gewindetemperatur
- T3: Umformtemperatur

## Patentansprüche

1. Verfahren zur mindestens zweistufigen Temperierung von Vorformlingen (28) aus thermoplastischem Kunststoff, bei dem die Vorformlinge (28) vor oder während einem Blas- bzw. Streckblasvorgang auf eine entsprechend eines vorgebbaren Wärmeprofils prozessspezifisch verteilte, für den Blas- bzw. Streckblasvorgang erforderliche Erweichungstemperatur (T3) zumindest des unterhalb des Gewindebereichs (29) und/oder eines darunter angeordneten Kragenbereichs des Vorformlings (28) befindlichen Körperabschnittes gebracht werden, und bei dem die Vorformlinge (28) zuvor annähernd gleichmäßig, insbesondere mit weitgehend homogener Temperaturverteilung (T2) vorgewärmt werden, wobei die vor bzw. in einer ersten Temperierungsstufe (30) zur Vorwärmung der Vorformlinge (28) verwendete Warmluft zumindest teilweise aus einer Prozessabwärme weiterer Komponenten einer Behälterfertigungs-, Behälterbehandlungs- und/oder Behälterabfüllmaschine gewonnen wird.

2. Verfahren nach Anspruch 1, bei dem der Temperierungsvorgang mindestens zwei unterschiedliche, aufeinander folgende Heizstufen (30, 38) umfasst, wobei in der ersten Heizstufe (30) eine annähernd gleichmäßige Grundtemperierung des gesamten Vorformlings (28) erfolgt, die höchstens einer maximalen Erwärmungstemperatur (T2) für einen Gewindebereich am oben offenen Halsabschnitt des Vorformlings (28) für eine Aufrechterhaltung dessen Formstabilität entspricht.

3. Verfahren nach Anspruch 2, bei dem die Vorformlinge (28) im Bereich der ersten Heizstufe (30) mittels in die oben offenen Vorformlinge (28) eintauchender Heizstäbe (34) auf die Grundtemperatur (T2) erwärmt werden.

4. Verfahren nach Anspruch 2, bei dem die Vorformlinge (28) vor ihrer Förderung in eine Heizvorrichtung (30) bzw. in einer Heizvorrichtung (30) und/oder nach ihrer Entnahme aus einem Vorratsraum (90) mittels einer Warmluftbeaufschlagung vorgewärmt werden.

5. Verfahren nach Anspruch 4, bei dem die vor bzw. in der ersten Temperierungsstufe (30) zur Vorwärmung der Vorformlinge (28) verwendete Warmluft aus der Prozessabwärme (54) der Heizstrecke (14) für die Vorformlinge (28) vor deren Blas- bzw. Streckblasumformung gewonnen wird.

6. Verfahren nach Anspruch 4 oder 5, bei dem die in der ersten Temperierungsstufe (30) zur Vorwärmung der Vorformlinge (28) verwendete Warmluft aus der Prozessabwärme von Pasteurisierungseinrichtungen (76), Sterilisationseinrichtungen und/oder Heißabfülleinrichtungen (72) innerhalb der Behälterbehandlungs- und/oderabfüllstrecke gewonnen wird.

7. Verfahren nach einem der Ansprüche 1 bis 6, bei dem die Temperatur der Vorformlinge (28) nach ihrer Vorwärmung gemessen und zur Anpassung und/oder Regelung der Heizparameter der Vorwärmung und/oder der Temperaturprofilierungsstufe (38) verwendet werden.

8. Heizvorrichtung (16) zur Temperierung von Vorformlingen (28) aus thermoplastischem Kunststoff für einen nachfolgenden Blas- bzw. Streckblasvorgang, wobei die Heizvorrichtung (16) mindestens zweistufig ausgebildet ist und eine Vorwärmstufe (30) mit Warmluftbeaufschlagung zur weitgehend homogenen Grundtemperierung der Vorformlinge (28) umfasst, die mit weiteren Komponenten einer Behälterfertigungs-, Behälterbehandlungs- und/oder Behälterabfüllmaschine zur Nutzung deren Abwärme gekoppelt ist.

9. Heizvorrichtung nach Anspruch 8, bei der die Vorwärmstufe (30) mit einer, einer Blasform- oder Streckblasformstation (20) vorgeordneten Heizstrecke (14) für die Vorformlinge (28) zur Nutzung deren Prozessabwärme gekoppelt ist.

10. Heizvorrichtung nach Anspruch 8 oder 9, bei der die Vorwärmstufe (30) mit wenigstens einer Pasteurisierungseinrichtung (76), Sterilisationseinrichtung und/oder Heißabfülleinrichtung (72) innerhalb der Behälterbehandlungs- und/oder Behälterabfüllstrecke zur Nutzung deren Prozessabwärme gekoppelt ist.

11. Heizvorrichtung nach einem der Ansprüche 8 bis 10, bei der die Vorwärmstufe (30) zumindest einen in die Vorformlinge (28) eintauchenden Heizstab (34) umfasst, der den Vorformling (28) von innen erwärmt und auf eine Grundtemperatur (T2) bringt.
